(19) **Europäisches Patentamt / European Patent Office / Office européen des brevets**

(11) **EP 1 814 951 B1**

(12) **EUROPEAN PATENT SPECIFICATION**

(45) Date of publication and mention
of the grant of the patent:
**02.12.2009 Bulletin 2009/49**

(51) Int Cl.:
**C08L 77/06** $^{(2006.01)}$

(21) Application number: **05786188.2**

(86) International application number:
**PCT/US2005/028705**

(22) Date of filing: **11.08.2005**

(87) International publication number:
**WO 2006/020845 (23.02.2006 Gazette 2006/08)**

(54) **TRANSPARENT POLYAMIDE COMPOSITIONS AND ARTICLES MADE THEREFROM**

TRANSPARENTE POLYAMIDZUSAMMENSETZUNGEN UND DAMIT HERGESTELLTE ARTIKEL

COMPOSITIONS DE POLYAMIDE TRANSPARENTES ET ARTICLES FABRIQUES AVEC CELLES-CI

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.08.2004 US 601746 P**

(43) Date of publication of application:
**08.08.2007 Bulletin 2007/32**

(73) Proprietor: **E.I. DU PONT DE NEMOURS AND COMPANY**
**Wilmington, DE 19898 (US)**

(72) Inventor: **CHENG, Paul, P.**
**Washington, West Virginia 26181 (US)**

(74) Representative: **Morf, Jan Stefan**
**Abitz & Partner**
**Patentanwälte**
**Postfach 86 01 09**
**81628 München (DE)**

(56) References cited:
**EP-A- 0 070 001      WO-A-02/40591**
**WO-A-94/25530      US-A1- 2002 173 584**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention relates to transparent polyamide compositions with improved creep resistance. More particularly the present invention relates to such compositions comprising melt mixed blends of at least one amorphous semiaromatic polyamide and at least one semicrystalline semiaromatic polyamide and having selected haze and light transmittance properties, and articles made therefrom.

### Background of the Invention

Polyamide resins have excellent toughness, strength, and chemical resistance, which make them useful as engineering resins for a wide variety of applications. For many applications it would be desirable to use a transparent polyamide, but many polyamides are semicrystalline materials, and, as such, are often opaque as incident light is scattered by the crystalline domains present in the polymers. Transparent polyamides are known, but are typically amorphous, and as a result, have reduced heat resistance and articles formed from these materials tend to suffer from creeping, or deformation over time.

U.S. patent 4,404,317 discloses blends of amorphous thermoplastic aliphatic polyamides copolymers with semicrystalline thermoplastic polyamides. The resulting blends could be made transparent and are disclosed to have good solvent resistance, dimensional stability, and retention of physical properties under moist or wet conditions. Japanese patent application publication 03-033157 discloses a polyamide resin composition with improved alcohol resistance prepared by compounding a copolyamide obtained from isophthalic acid, terephthalic acid, hexamethylenediamine, and an alicyclic diamine with a semiaromatic polyamide obtained from an aromatic diamine and a dicarboxylic acid.

It is an object of the present invention to provide a polyamide composition that is both transparent and that has good creep resistance. Another object of the present invention is to provide polyamide compositions comprising melt-mixed blends of one or more amorphous semiaromatic polyamides and one or more semicrystalline semiaromatic polyamides, such that these compositions exhibit defined maximum haze and minimum light transmittance properties. A feature of the compositions of present invention is their ease of processing, as they are well suited to melt-blending using any of a variety of methods widely appreciated among those having skill in the field. An advantage of the compositions of the present invention is that they are readily molded using conventional melt processing techniques into a wide spectrum of articles, where optical transparency is an important feature thereof. These and other objects, features and advantages of the present invention will become better understood upon having reference to the following description of the invention.

### Summary of the Invention

There is disclosed and claimed herein transparent polyamide compositions comprising a melt-mixed blend of:

(i) 50 to 95 weight percent of at least one amorphous semiaromatic polyamide comprising repeat units derived from

(a) 20 to 49 mole percent isophthalic acid,
(b) 1 to 30 mole percent terephthalic acid,
(c) 25 to 50 mole percent hexamethylenediamine,
(d) optionally 0 to 25 mole percent of at least one alicyclic diamine, and
(e) optionally 0 to 40 mole percent of one or more aminocarboxylic acids and/or lactams,

wherein the amorphous semiaromatic polyamide has a heat of fusion of less than 4 J/g; and

(ii) 5 to 50 weight percent of at least one semicrystalline semiaromatic polyamide comprising repeat units derived from

(f) terephthalic acid and, optionally, one or more additional aromatic or aliphatic diacids,
(g) at least one aliphatic diamine, and
(h) optionally, one or more aminocarboxylic acids and/or lactams,

wherein the terephthalic acid comprises 50 to 100 mole percent of (f), and the one or more aminocarboxylic acids or lactams comprise 0 to 25 mole percent of the total amount of (f) + (g) + (h);
and wherein the semicrystalline semiaromatic polyamide has a melting point of at least 280 °C and a heat of fusion of at least 5 J/g; and such that the composition has a haze of less than 12 and a light transmittance of at least 65 percent when measured through a 2 mm thick sample of the composition, according to ASTM D1003.

## Detailed Description of the Invention

The transparent compositions of the present invention comprise at least one amorphous semiaromatic polyamide and at least one semicrystalline semiaromatic polyamide.

As used herein and as will be understood by those skilled in the art, the terms terephthalic acid, isophthalic acid, and dicarboxylic acid refer also to the corresponding carboxylic acid derivatives of these materials, which can include carboxylic acid esters, diesters, and acid chlorides.

Amorphous semiaromatic polyamide

The at least one amorphous semiaromatic polyamide comprises repeat units derived from 20 to 49 mole percent isophthalic acid, 1 to 30 mole percent terephthalic acid, and 25 to 50 mole percent hexamethylenediamine. The polyamide may optionally comprise 0 to about 25 mole percent (and if used, preferably 1 to 25 mole percent) of one or more alicyclic diamines, where the mole percentages are based on the total amount of amorphous polyamide. Up to 40 mole percent of the repeat units of the amorphous polyamide may optionally be derived from one or more aminocarboxylic acids (or acid derivatives), and/or lactams, and/or aliphatic dicarboxylic acids containing 4-20 carbon atoms, and/or aliphatic diamines containing 4 to 20 carbon atoms.

The alicyclic diamine preferably contains at least one cyclohexane moiety. Examples of suitable alicyclic diamines include 1-amino-3-aminomethyl-3,5,5,-trimethylcyclohexane; 1,4-bis(aminomethyl)cyclohexane; and bis(*p*-aminocyclohexyl)methane. Any of the stereoisomers of the alicyclic diamines may be used.

The amorphous polyamide has a heat of fusion of less than 4 J/g, measured as described further below in the detailed description.

The amorphous polyamide is present in 50 to 95 weight percent, or more preferably in 70 to 92 weight percent, based on the total amount of semicrystalline and amorphous polyamide present.

Semicrystalline semiaromatic polyamide

The at least one semicrystalline semiaromatic polyamide comprises repeat units derived from terephthalic acid monomers and one or more aliphatic diamines monomers with 6 to 20 carbon atoms. The semicrystalline polyamide may optionally contain repeat units derived from one or more additional aliphatic or aromatic dicarboxylic acid monomers. Moreover the semicrystalline polyamide may optionally contain repeat units derived from one or more aminocarboxylic acids (or acid derivatives) and/or lactams.

Suitable examples of additional dicarboxylic acid monomers will preferably include those having 6 to 20 carbon atoms and include, but are not limited to, isophthalic acid, dodecanedioic acid, sebacic acid, and adipic acid. The terephthalic acid monomers comprise 50 to 100 mole percent of the dicarboxylic acid monomers used to make the semicrystalline polyamide.

The aliphatic diamine monomers may be linear or branched. Preferred aliphatic diamines include hexamethylenediamine, 2-methyl-1,5-pentanediamine, 1,10-diaminodecane and 1,12-diaminododecane. Suitable examples of aminocarboxylic acids (or acid derivatives) and/or lactams from which repeat units of semicrystalline semiaromatic polyamide can be derived include, but are not limited to caprolactam, 11-aminoundecanoic acid, and laurolactam.

If used, the one or more aminocarboxylic acids and lactams will preferably be present in from 1 to 25 mole percent of the total monomers used to make the semicrystalline polyamide.

Examples of preferred semicrystalline polyamides include hexamethylene adipamide/hexamethylene terephthalamide copolyamide (polyamide 6,T/6,6), hexamethylene terephthalamide/2-methylpentamethylene terephthalamide copolyamide (polyamide 6,T/D,T), poly(dodecamethylene terephthalamide) (polyamide 12,T), poly(decamethylene terephthalamide) (polyamide 10,T), decamethylene terephthalamide/decamethylene dodecanoamide copolyamide (10,T/10,12), and poly(nonamethylene terephthalamide) (polyamide 9,T).

The semicrystalline polyamide will have a melting point that is at least 280 °C and is preferably less than 340 °C. The semicrystalline polyamide will have a heat of fusion that is at least about 5 J/g. Herein heats of fusion are determined by ASTM D3418-82, at a heating rate of 20 °C/min. The peak of the melting endotherm is taken as the melting point. The heat of fusion is taken as the area under the melting endotherm. All of these are measured on the second heat, meaning that the sample is heated at 20 °C/min until the melting point and/or glass transition point, whichever is higher, is exceeded, and then the sample is cooled at 20 °C/min to 30 °C. The heating cycle is begins again and measurements are then taken on a second heat, also done at 20 °C/min.

The semicrystalline polyamide is present in 5 to 50 weight percent, or more preferably in 8 to 30 weight percent, based on the total amount of semicrystalline and amorphous polyamide present.

Additives

The compositions of the present invention may contain any of a variety of additives either alone or in combination with one another. These additives may be selected from ultraviolet (UV) light stabilizers, optical brighteners, lubricants, antioxidants and/or heat stabilizers, colorants, and nanoparticle fillers, and according to the properties of interest. Each of these additives are discussed in further detail immediately below.

The composition of the present invention may optionally comprise 0.05 to 2.5 weight percent, based on the total weight of the composition, of ultraviolet (UV) light stabilizers. Suitable UV stabilizers include hindered amine light stabilizers, benzotriazoles, resorcinols, benzophenones, and salicylates. A preferred UV light stabilizer is *N*-(2-ethoxyphenyl)-*N*'-(2-ethylphenyl)-ethanediamide.

The composition of the present invention may optionally comprise 0.001 to 3 weight percent, based on the total weight of the composition of at least one optical brightener. Examples of optical brighteners include stilbenes such as bis(benzoxazolylstilbenes), diaminostilbenes, and bis(triazoyl)stilbenes; bis(benzoxazoyls); pyrazoles; and distyrylbiphenyls. A preferred optical brightener is 4,4'-bis(2-benzoxazolyl)stilbene, which is available as Eastobrite® OB-1 from Eastman Chemical.

The composition may optionally comprise 0.001 to 1 weight percent based on the total weight of the composition, of lubricants and processing aids. A preferred lubricant is aluminum distearate.

The compositions may optionally comprise other additives such as 0.01 to 1 weight percent antioxidants and/or heat stabilizers; 0.1 to 1 weight percent colorants; 0.5 to 3 weight percent nanoparticles; and the like, provided that their presence does not appreciably or deleteriously increase the haze or decrease the light transmittance of the composition. Examples of antioxidants and heat stabilizers include hindered phenols and hydroquinones. Examples of nanoparticles include nanoclays.

The compositions of the present invention are made by melt-blending the components using any known methods. The component materials may be mixed to homogeneity using a melt-mixer such as a single or twin-screw extruder, blender, kneader, Banbury mixer, etc. to give a resin composition. Or, part of the materials may be mixed in a melt-mixer, and the rest of the materials may then be added and further melt-mixed until homogeneous.

The compositions of the present invention are transparent. By transparent, it is meant that they have a haze of 12 or less and a light transmittance of at least 65 percent, or preferably at least 75 percent, as measured following ASTM D1003 through a 2 mm thick sample of the composition.

The compositions may be formed into the articles using any suitable melt-processing technique, such as injection molding, extrusion, blow molding, injection blow molding, thermoforming and the like.

The compositions of the present invention are suitable for the manufacture of any of a wide variety of articles where optical transparency and good mechanical properties are desirable. Without intending to limit the generality of the foregoing, articles formed from the compositions of the present invention can include sight windows for tanks or reservoirs for fuel and/or oil. Other suitable applications are those that require the use of parts that are both optically transparent and have good mechanical properties and creep resistance.

**Examples**

Haze and light transmittance are measured on 2 mm thick samples by a integrating sphere hazemeter following ASTM D1003-61. A sphere of diameter 200-250 mm has a matte-white internal surface. The photocell detects the uniform intensity of scattered light inside the sphere. A circular light trap captures all the incident beam, if no specimen is present, with an annular gap of 1.3 degree. From these measurements the total transmittance $T_t$ is calculated as $T_t = I2/I1$. And the diffuse transmittance $T_d$ as:

$$T_d = (I4 - I3(I2/I1))/I1$$

Where:

I1:  incident light
I2:  total light transmitted by specimen
I3:  light scattered by instrument
I4:  light scattered by instrument and specimen

$$Haze = 100 \times (Td/Tt)$$

Elongation at break, tensile properties, and notched Izod impact strengths were measured using standard ISO testing procedures at 23 °C on samples dry-as-molded.

Creep resistance was determined in a dynamic mechanical analyzer using an accelerated creep testing method based on a time-temperature superposition principle. The method is described generally in Journal of Thermal Analysis and Calorimetry, 69 (2002) 37-52. Time is simulated by heating the sample. For each sample, a 10 x 42 x 4.2 mm flexural bar was clamped in a dynamic mechanical analyzer and subjected to a constant stress load of 2000 psi. Experiments were started at ca. 26 °C and temperatures were increased at 5 °C increments to ca. 110 °C. At each temperature the sample was allowed about 30 minutes to equilibrate to temperature, experienced load for 15 minutes, and allowed to recover for 60 minutes.

Example 1-4

The ingredients shown in Table 1 were combined and melt-blended by extrusion. A 58 mm bilobal twin-screw extruder was used in the case of Examples 1 and 2 and a 57 mm trilobal extruder was used in the case of Examples 3 and 4. The melt temperatures were in the range of about 340 to about 345 °C.

Amorphous polyamide A is a polyamide derived from about 50 mole percent hexamethylendiamine, about 15 mole percent terephthalic acid, and about 35 mole percent isophthalic acid. Semicrystalline polyamide A is polyamide 6,T/D,T with a melting point of about 300 °C. The UV light stabilizer is *N*-(2-ethoxyphenyl)-*N'*-(2-ethylphenyl)-ethanediamide, sold as Sanduvor VSU by Clariant. The optical brightener is Eastobrite® OB-1, available from Eastman Chemical.

Table 1

| | Example 1 | Example 2 | Example 3 | Example 4 |
|---|---|---|---|---|
| | | | | |
| Amorphous polyamide A | 81.3 | 68.83 | 81.29 | 81.3 |
| Semicrystalline polyamide A | 18 | 30 | 18 | 18 |
| Aluminum stearate | 0.1 | 0.17 | 0.1 | 0.1 |
| UV light stabilizer | 0.6 | 1 | 0.6 | 0.6 |
| Optical brightener | -- | -- | 0.01 | -- |
| | | | | |
| Elongation at break (%) | 11.2 | 4.4 | 25 | 16.5 |
| Tensile strength at break (MPa) | 88.6 | 85.4 | 91 | 92.5 |
| Tensile modulus (GPa) | 4.76 | 3.53 | 3.74 | 2.89 |
| Notched Izod impact strength (kJ/m$^2$) | 9.1 | 9.8 | 8.5 | -- |
| Light transmittance (%) | -- | -- | -- | 89 |
| Haze | -- | -- | -- | 4 |
| Ingredient quantities are given in weight percent relative to the total weight of the composition | | | | |

Examples 5-9 and Comparative Example 1

The ingredients shown in Table 2 were combined and melt-blended by extrusion using a 40 mm twin-screw extruder. The melt temperatures were in the range of about 340 to about 345 °C. Amorphous polyamide B is a polyamide derived from about 47 mole percent hexamethylendiamine, about 3 mole percent of an alicyclic diamine, about 15 mole percent terephthalic acid, and about 35 mole percent isophthalic acid. Semicrystalline polyamide A is polyamide 6,T/D,T with a melting point of about 300 °C. Semicrystalline polyamide B is polyamide 6,T/6,6 with a melting point of about 312 °C.

The creep resistance of each of the compositions was measured as described above and percent total strain (the sum of elastic strain and creep strain) after simulated total duration of up to $10^5$ hours is shown in Table 2. The initial strain reported in Table 2 is the elastic strain. A lower percent strain corresponds to greater creep resistance.

A comparison of Comparative Example 1, an amorphous polyamide, with Examples 5-9, blends of an amorphous polyamide with semicrystalline semiaromatic polyamides, indicates that the presence of the semicrystalline semiaromatic polyamides significantly improves the creep resistance of the compositions.

Table 2

|  | Comp. Ex. 1 | Ex. 5 | Ex. 6 | Ex. 7 | Ex. 8 | Ex. 9 |
|---|---|---|---|---|---|---|
|  |  |  |  |  |  |  |
| Amorphous polyamide B | 100 | 95 | 90 | 87 | 90 | 90 |
| Semicrystalline polyamide A | -- | 5 | 10 | 13 | -- | 5 |
| Semicrystalline polyamide B | -- | -- | -- | -- | 10 | 5 |
|  |  |  |  |  |  |  |
| Strain (%): |  |  |  |  |  |  |
| Initial | 0.55 | 0.59 | 0.58 | 0.54 | 0.57 | 0.57 |
| 1 h | 0.60 | 0.63 | 0.62 | 0.57 | 0.60 | 0.60 |
| 10 h | 0.64 | 0.66 | 0.65 | 0.59 | 0.62 | 0.62 |
| $10^2$ h | 0.73 | 0.72 | 0.71 | 0.62 | 0.66 | 0.66 |
| $10^3$ h | 0.97 | 0.86 | 0.82 | 0.70 | 0.75 | 0.72 |
| $10^4$ h | 1.82 | 1.22 | 1.12 | 0.96 | 0.95 | 0.84 |
| $10^5$ h | -- | -- | 2.11 | 1.95 | 1.51 | 1.14 |
|  |  |  |  |  |  |  |
| Ingredient quantities are given in weight percent relative to the total weight of the composition | | | | | | |

## Claims

1. A transparent polyamide composition comprising a melt-mixed blend of:

(i) 50 to 95 weight percent of at least one amorphous semiaromatic polyamide comprising repeat units derived from

**(a)** 20 to 49 mole percent isophthalic acid,
**(b)** 1 to 30 mole percent terephthalic acid,
**(c)** 25 to 50 mole percent hexamethylenediamine,
**(d)** optionally 0 to 25 mole percent of at least one alicyclic diamine, and
**(e)** optionally 0 to 40 mole percent of one or more aminocarboxylic acids and/or lactams,

wherein said amorphous semiaromatic polyamide has a heat of fusion of less than 4 J/g; and
(ii) 5 to 50 weight percent of at least one semicrystalline semiaromatic polyamide comprising repeat units derived from

**(f)** terephthalic acid and, optionally, one or more additional aromatic or aliphatic diacids,
**(g)** at least one aliphatic diamine, and
**(h)** optionally, one or more aminocarboxylic acids and/or lactams,

wherein said terephthalic acid comprises 50 to 100 mole percent of (f), and said one or more aminocarboxylic acids and/or lactams comprise 0 to 25 mole percent of the total amount of (f) + (g) + (h), and
wherein said semicrystalline semiaromatic polyamide has a melting point of at least 280 °C and a heat of fusion of at least 5 J/g;

such that the composition has a haze of less than 12 and a light transmittance of at least 65 percent when measured through a 2 mm thick sample of the composition, according to ASTM D1003.

2. The composition of claim 1 wherein said semicrystalline semiaromatic polyamide is selected from the group consisting of one or more of polyamide 6,T/6,6; polyamide 6,T/D,T,; polyamide 12,T; polyamide 10,T; polyamide 10,T/10,12; and polyamide 9,T.

3. The composition of claim 1 further comprising one or more additives selected from the group consisting of at least one ultraviolet light stabilizers; at least one optical brightener; at least one lubricant; at least one antioxidant and/or heat stabilizer; at least one colorants; and/or at least one nanoparticle filler.

4. The composition of claim 3 wherein at least one ultraviolet light stabilizer is present in 0.5 to 2.5 weight percent, based on the total weight of the composition.

5. The composition of claim 3 wherein at least one optical brightener is present in 0.001 to 3 weight percent, based on the total weight of the composition.

6. The composition of claim 3 wherein at least one lubricant is present in 0.001 to 1 weight percent, based on the total weight of the composition.

7. The composition of claim 3 wherein at least one antioxidant and/or heat stabilizer is present in 0.01 to 1 weight percent, based on the total weight of the composition.

8. The composition of claim 3 wherein at least one colorant is present in 0.1 to 1 weight percent, based on the total weight of the composition.

9. The composition of claim 3 wherein at least one nanoparticle filler is present in 0.5 to 3 weight percent, based on the total weight of the composition

10. The composition of claim 1 wherein the alicyclic diamine is one or more of 1-amino-3-aminomethyl-3,5,5,-trimethylcyclohexane; 1,4-bis(aminomethyl)cyclohexane; and bis($p$-aminocyclohexyl)methane.

11. The composition of claim 1 wherein the amorphous semiaromatic polyamide comprising repeat units derived from (d) 1 to 25 mole percent of at least one alicylic diamine.

12. The composition of claim 5 wherein the optical brightener is at least one stilbene, pyrazole, and/or distyrylbiphenyl.

13. The composition of claim 6 wherein the lubricant is aluminum distearate.

14. An article made from the composition of claim 1.

15. The article of claim 14 in the form of a sight window for a fuel or oil tank or reservoir.

**Patentansprüche**

1. Transparente Polyamid-Zusammensetzung, die ein in der Schmelze vermischtes Gemisch aus den folgenden Bestandteilen aufweist:

(i) 50 bis 95 Gew.-% mindestens eines amorphen halbaromatischen Polyamids mit Struktureinheiten, die abgeleitet sind von:

(a) 20 bis 49 Mol-% Isophthalsäure,
(b) 1 bis 30 Mol-% Terephthalsäure,

(c) 25 bis 50 Mol-% Hexamethylendiamin,
(d) wahlweise 0 bis 25 Mol-% mindestens eines alicyclischen Diamins, und
(e) wahlweise 0 bis 40 Mol-% einer oder mehrerer Aminocarbonsäuren und/oder eines oder mehrerer Lactame,

wobei das amorphe halbaromatische Polyamid eine Schmelzwärme von weniger als 4 J/g aufweist; und
(ii) 5 bis 50 Gew.-% mindestens eines halbkristallinen halbaromatischen Polyamids mit Struktureinheiten, die abgeleitet sind von:

(f) Terephthalsäure und wahlweise einer oder mehreren weiteren aromatischen oder aliphatischen zweiwertigen Säuren,
(g) mindestens einem aliphatischen Diamin, und
(h) wahlweise einer oder mehreren Aminocarbonsäuren und/oder einem oder mehreren Lactamen,

wobei die Terephthalsäure 50 bis 100 Mol-% von (f) aufweist und die eine oder mehreren Aminocarbonsäuren und/oder Lactame 0 bis 25 Mol-% der Gesamtmenge von (f) + (g) + (h) aufweisen, und
wobei das halbkristalline halbaromatische Polyamid einen Schmelzpunkt von mindestens 280°C und eine Schmelzwärme von mindestens 5 J/g aufweist;
so daß die Zusammensetzung eine Trübung von weniger als 12 und eine Lichtdurchlässigkeit von mindestens 65 Prozent aufweist, gemessen durch eine 2 mm dicke Probe der Zusammensetzung gemäß ASTM D1003.

2. Zusammensetzung nach Anspruch 1, wobei das halbkristalline halbaromatische Polyamid aus der Gruppe ausgewählt ist, die aus einem oder mehreren der folgenden Polyamide besteht: Polyamid 6, T/6,6; Polyamid 6, T/D,T; Polyamid 12, T; Polyamid 10, T; Polyamid 10, T/10,12 und Polyamid 9, T.

3. Zusammensetzung nach Anspruch 1, die ferner einen oder mehrere Zusatzstoffe aufweist, die aus der Gruppe ausgewählt sind, die aus mindestens einem Ultraviolettstabilisator, mindestens einem optischen Aufheller, mindestens einem Gleitmittel, mindestens einem Antioxidationsmittel und/oder Wärmestabilisator; mindestens einem Farbstoff und/oder mindestens einem Nanopartikel-Füllstoff besteht.

4. Zusammensetzung nach Anspruch 3, wobei mindestens ein Ultraviolettstabilisator in einem Anteil von 0,5 bis 2,5 Gew.-% anwesend ist, bezogen auf das Gesamtgewicht der Zusammensetzung.

5. Zusammensetzung nach Anspruch 3, wobei mindestens ein optischer Aufheller in einem Anteil von 0,001 bis 3 Gew.-% anwesend ist, bezogen auf das Gesamtgewicht der Zusammensetzung.

6. Zusammensetzung nach Anspruch 3, wobei mindestens ein Gleitmittel in einem Anteil von 0,001 bis 1 Gew.-% anwesend ist, bezogen auf das Gesamtgewicht der Zusammensetzung.

7. Zusammensetzung nach Anspruch 3, wobei mindestens ein Antioxidationsmittel und/oder Wärmestabilisator in einem Anteil von 0,01 bis 1 Gew.-% anwesend ist, bezogen auf das Gesamtgewicht der Zusammensetzung.

8. Zusammensetzung nach Anspruch 3, wobei mindestens ein Farbstoff in einem Anteil von 0,1 bis 1 Gew.-% anwesend ist, bezogen auf das Gesamtgewicht der Zusammensetzung.

9. Zusammensetzung nach Anspruch 3, wobei mindestens ein Nanopartikel-Füllstoff in einem Anteil von 0,5 bis 3 Gew.-% anwesend ist, bezogen auf das Gesamtgewicht der Zusammensetzung.

10. Zusammensetzung nach Anspruch 1, wobei das alicyclische Diamin eines oder mehrere der folgenden Diamine ist: 1-Amino-3-aminomethyl-3,5,5-trimethylcyclohexan; 1,4-Bis(aminomethyl) cyclohexan und Bis-(ρ-aminocyclohexyl) methan.

11. Zusammensetzung nach Anspruch 1, wobei das amorphe halbaromatische Polyamid Struktureinheiten aufweist, die von (d) 1 bis 25 Mol-% mindestens eines alicyclischen Diamins abgeleitet sind.

12. Zusammensetzung nach Anspruch 5, wobei der optische Aufheller mindestens ein Stilben, Pyrazol und/oder Distyrylbiphenyl ist.

**13.** Zusammensetzung nach Anspruch 6, wobei das Gleitmittel Aluminiumdistearat ist.

**14.** Artikel, hergestellt aus der Zusammensetzung nach Anspruch 1.

**15.** Artikel nach Anspruch 14 in Form eines Sichtfensters für einen Kraftstoff- oder Öltank oder -Speicherbehälter.

**Revendications**

**1.** Composition de polyamide transparente comprenant un mélange mélangé à l'état fondu:

(i) de 50 à 95 pour-cent en poids d'au moins un polyamide semi-aromatique amorphe comprenant des unités de répétition dérivées:

(a) de 20 à 49 pour-cent en moles d'acide isophtalique,
(b) de 1 à 30 pour-cent en moles d'acide téréphtalique,
(c) de 25 à 50 pour-cent en moles d'hexaméthylènediamine,
(d) optionnellement de 0 à 25 pour-cent en moles d'au moins une diamine alicyclique, et
(e) optionnellement de 0 à 40 pour-cent en moles d'un ou de plusieurs acides aminocarboxyliques et/ou lactames,

dans laquelle ledit polyamide semi-aromatique amorphe possède une chaleur de fusion de moins de 4 J/g; et
(ii) de 5 à 50 pour-cent en poids d'au moins un polyamide semi-aromatique semi-cristallin comprenant des unités de répétition dérivées:

(f) d'acide téréphtalique et, optionnellement, d'un ou de plusieurs diacides aliphatiques ou aromatiques supplémentaires,
(g) d'au moins une diamine aliphatique, et
(h) optionnellement, d'un ou de plusieurs acides aminocarboxyliques et/ou lactames,

dans laquelle ledit acide téréphtalique comprend de 50 à 100 pour-cent en moles de (f) et lesdits un ou plusieurs acides aminocarboxyliques et/ou lactames comprennent de 0 à 25 pour-cent en moles de la quantité totale de (f) + (g) + (h), et
dans laquelle ledit polyamide semi-aromatique semi-cristallin possède un point de fusion d'au moins 280°C et une chaleur de fusion d'au moins 5 J/g;
de sorte que la composition possède un voile de moins de 12 et une transmittance de lumière d'au moins 65 pour-cent lors d'une mesure à travers un échantillon de 2 mm d'épaisseur de la composition, selon la norme ASTM D1003.

**2.** Composition selon la revendication 1, dans laquelle ledit polyamide semi-aromatique semi-cristallin est choisi dans le groupe constitué d'un ou de plusieurs parmi le polyamide 6,T/6,6; le polyamide 6,T/D,T; le polyamide 12,T; le polyamide 10,T; le polyamide 10,T/10,12; et le polyamide 9,T.

**3.** Composition selon la revendication 1, comprenant en outre un ou plusieurs additifs choisis dans le groupe constitué d'au moins un stabilisant de lumière ultraviolette; d'au moins un azureur optique; d'au moins un lubrifiant; d'au moins un antioxydant et/ou stabilisant thermique; d'au moins un colorant; et/ou d'au moins une charge nanoparticulaire.

**4.** Composition selon la revendication 3, dans laquelle le au moins un stabilisant de lumière ultraviolette est présent dans une quantité de 0,5 à 2,5 pour-cent en poids, sur la base du poids total de la composition.

**5.** Composition selon la revendication 3, dans laquelle le au moins un azureur optique est présent dans une quantité de 0,001 à 3 pour-cent en poids, sur la base du poids total de la composition.

**6.** Composition selon la revendication 3, dans laquelle le au moins un lubrifiant est présent dans une quantité de 0,001 à 1 pour-cent en poids, sur la base du poids total de la composition.

**7.** Composition selon la revendication 3, dans laquelle le au moins un antioxydant et/ou stabilisant thermique est présent dans une quantité de 0,01 à 1 pour-cent en poids, sur la base du poids total de la composition.

9

8. Composition selon la revendication 3, dans laquelle le au moins un colorant est présent dans une quantité de 0,1 à 1 pour-cent en poids, sur la base du poids total de la composition.

9. Composition selon la revendication 3, dans laquelle la au moins une charge nanoparticulaire est présente dans une quantité de 0,5 à 3 pour-cent en poids, sur la base du poids total de la composition.

10. Composition selon la revendication 1, dans laquelle la diamine alicyclique est un ou plusieurs parmi le 1-amino-3-aminométhyl-3,5,5-triméthylcyclohexane; le 1,4-bis(aminométhyl)cyclohexane; et le bis(p-aminocyclohexyl)méthane.

11. Composition selon la revendication 1, dans laquelle le polyamide semi-aromatique amorphe comprend des unités de répétition dérivées (d) de 1 à 25 pour-cent en moles d'au moins une diamine alicyclique.

12. Composition selon la revendication 5, dans laquelle l'azureur optique est au moins un stilbène, un pyrazole et/ou un distyrylbiphényle.

13. Composition selon la revendication 6, dans laquelle le lubrifiant est du distéarate d'aluminium.

14. Article fabriqué à partir de la composition selon la revendication 1.

15. Article selon la revendication 14 sous la forme d'un verre-regard pour une citerne ou un réservoir de carburant ou de pétrole.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4404317 A

- JP 3033157 A

**Non-patent literature cited in the description**

- *Journal of Thermal Analysis and Calorimetry,* 2002, vol. 69, 37-52